# EUROPEAN PATENT APPLICATION

(11) **EP 1 118 795 A1**
(43) Date of publication of application: **25.07.2001**
(21) Application number: 00204707.4
(22) Date of filing: 22.12.2000
(51) Int. Cl.: F16G 5/16

(54) **Endless transmission element for a continuously variable transmission**

(30) Priority: 20.01.2000 BE 20000045
(71) Applicant: ZF GETRIEBE N.V. SINT TRUIDEN, 3800 Sint-Truiden (BE)
(72) Inventor: Vermeulen, Jozef Karel Irma, 3800 Sint-Truiden (BE)
(74) Representative: Donné, Eddy

(57) **Abstract**

Endless transmission element for a continuously variable transmission, of the type at least consisting of a series of transverse bodies (11), as well as belt packages (12-13-14) cooperating therewith and extending in longitudinal direction, characterized in that the transmission element (1) comprises at least three of such belt packages (12-13-14).

## Description

This invention relates to an endless transmission element for a continuously variable transmission, more particularly for a transmission for motor vehicles.

Still more particularly, it relates to an endless transmission element, also called a push-belt, of the type at least consisting of a series of transverse bodies, as well as belt packages cooperating therewith and extending in longitudinal direction.

Hereby, the aforementioned transverse bodies consist of blocks with inclined sides which form running surfaces which can cooperate with the conical surfaces of V-shaped pulleys. These transverse bodies are connected to each other by means of the aforementioned longitudinally extending belt packages, so as to form a belt-shaped unit.

In practice, such transmission element is equipped with two belt packages. As a larger power has to be transferred, the belt packages then have to be realized sturdier.

So, first of all there were transmission elements with a total width of 24 mm which were provided with two belt packages, each with a width of 9,5 mm. Subsequently, heavier embodiments were developed, with two belt backages of 12 mm and a total width of 30 mm for the complete transmission element.

Although these heavier embodiments allow to transmit a larger torque, they show the disadvantage that, due to the relatively large width of each belt package in respect to the sum of these widths, they are difficult to cool, as a result of which the risk that oil gets burned is increased, which generally results in a shorter service life of the transmission.

This disadvantageous effect occurs to a larger extent in the case that the belt packages consist of series of flat belts situated on top of each other, in which fine, continous grooves are provided in order to cool these belts. Due to poor cooling, not only the cooling and/or lubricating liquid will burn up, moreover, the burned liquid also causes a clogging of the grooves, as a result of which lubrication and cooling are considerably reduced and the transmission finally becomes completely damaged.

The invention in general has a transmission element as its object which is improved in respect to the aforementioned known embodiments.

More particularly, in its preferred form of embodiment, it also has a transmission element as its object whereby the aforementioned disadvantages of the existing embodiments are excluded and whereby, in relation to the torque which can be transmitted by such transmission element, a good cooling is obtained, even with heavier embodiments.

To this aim, the invention relates to an endless transmission element of the above-mentioned type, which shows the characteristic that the transmission element comprises at least three of such belt packages.

Because at least three belt packages are applied, the cooling and/or lubricating liquid can come into contact with, altogether, six flanks of the belt packages, as a result of which a better cooling is realized, contrary to the known embodiment whereby the lubricating and/of cooling liquid comes into contact with only four flanks. Thus, on one hand, a better cooling is obtained as, in relation to the total volume of belt packages, a larger contact surface is made available. On the other hand, at least in the case that belt packages with a cooling channel system are applied, it is obtained that, in relation to the total width covered by all belt packages, the width to be passed in one time remains limited, as a result of which the flow of the cooling and/or lubricating liquid through the cooling channel system is improved, and the risk of heat accumulation and burning is much smaller.

Another advantage of the invention consists in that a better distribution of forces is obtained.

Still another advantage consists in that the center belt package can be provided between protruding parts or similar which are situated at the bodies, as a result of which a centering effect is obtained.

Although the invention is particularly efficient in heavier embodiments, it has to be noted that it also offers advantages with smaller embodiments. Thus, the invention extents to heavy-duty as well as light-duty embodiments, in other words, with a total width which is larger or equal to 30 mm, as well as with a width which is smaller than 30 mm.

Preferably, use shall be made of precisely three belt packages.

More particularly, it is preferred that these belt packages are situated next to each other and, in particular, all have the same length and cooperate with the aforementioned bodies on the same radial level.

Preferably, the endless transmission element comprises an uneven number of belt packages, and the middlemost situated band-shaped belt package is situated according to the transverse direction precisely in the center of the transmission element. As a result thereof, a very uniform distribution of forces is obtained. Possible length differences of the belt packages, as a consequence of tolerance deviations, then also will effect only after a longer period of time than in the case that only two belt packages are used.

In a practical form of embodiment, the belt packages will be arranged according to the transverse direction at a well-defined mutual distance, as a result of which the cooling and/or lubricating liquid, by means of the spaces prevailing between the bodies, can come very easily into contact with the flanks of the belt packages.

According to another important aspect of the invention, the aforementioned bodies, at the sides directed radially outward, are provided with at least two protruding parts, and at least one of the belt packages is situated between the aforementioned two protruding parts of each respective body. More particularly, it is preferred that between the protruding parts precisely one belt package is present and that this band-shaped belt package at opposite sides rests against the aforementioned protruding parts, as a result of which the aforementioned bodies, so to speak, are centered by means of the center belt package.

With the intention of better showing the characteristics of the invention, hereafter, as an example without any limitative character, a preferred form of embodiment is described, with reference to the accompanying drawings, wherein:
figure 1 schematically represents a continuously variable transmission which uses a transmission element according to the invention;
figure 2 in perspective represents a portion of the transmission element of figure 1;
figures 3, 4 and 5 represent views according to arrows F3, F4 and F5, respectively, in figure 2;
figure 6, at a large scale and in perspective, represents the underside of one of the belts of which the belt packages are composed, for example, the belt indicated by F6 in figure 3.

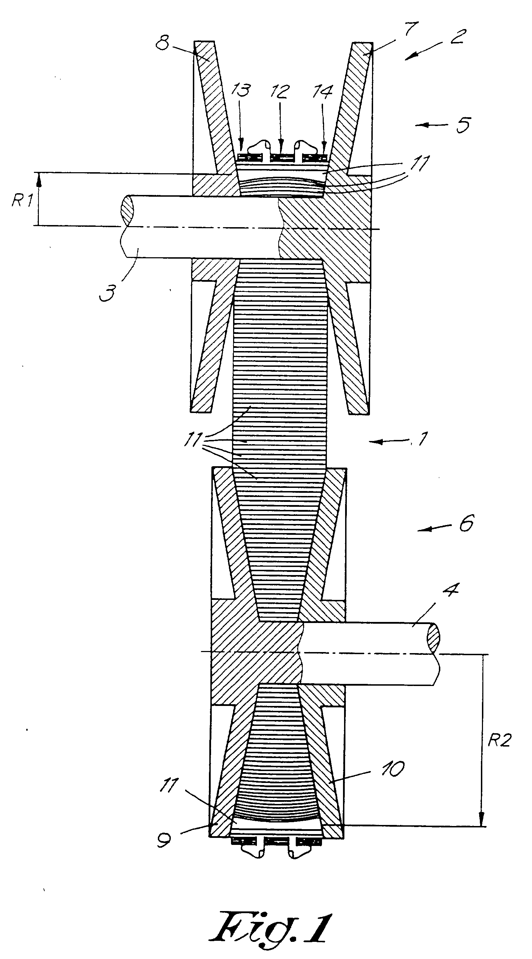

As represented in figure 1, the invention relates to an endless transmission element 1 for a continuously variable transmission 2, more particularly a transmission for motor vehicles.

As known, such transmission 2 substantially consists of an input shaft 3, an output shaft 4 and V-shaped pulleys 5-6, respectively, provided on these shafts 3-4. The pulleys 5-6 each consist of two pulley halves 7-8 and 9-10, respectively, the mutual distance of which can be altered. In most cases, hereby one pulley half, in this case 7, 9, respectively, is fixed, whereas the other pulley half, in this case 8, 10, respectively, can be shifted over the shaft 3, 4 respectively, concerned, by means of non-represented drive means.

By altering the distances between the pulley halves, the radii R1 and R2 change, as a result of which the transmission ratio between the input shaft 3 and the output shaft 4 can be altered continuously.

An example of such continuously variable transmission and of the control system thereof is described, amongst others, in the document US 5,169,366.

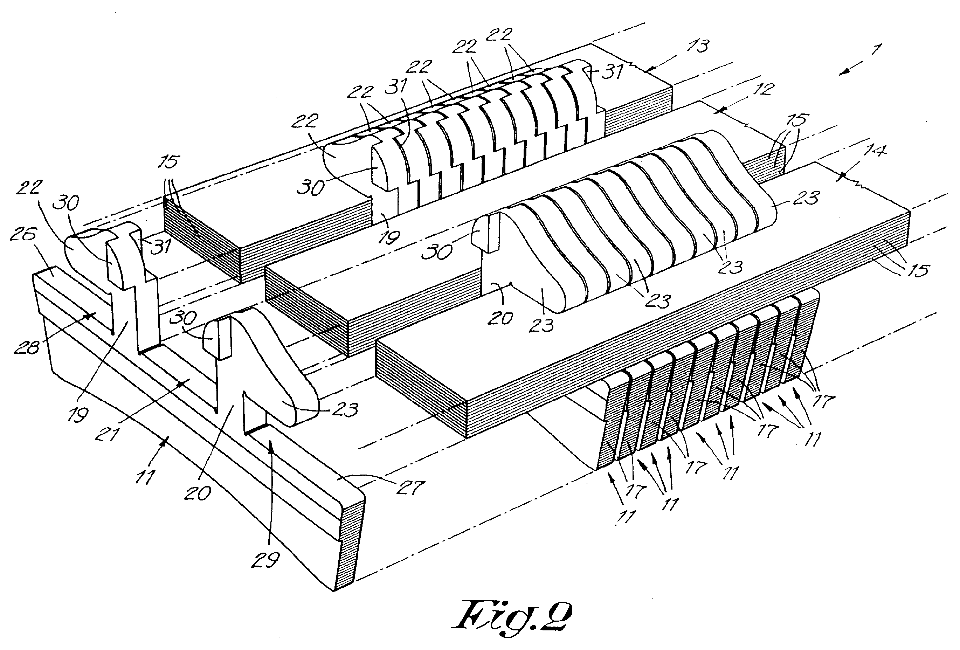

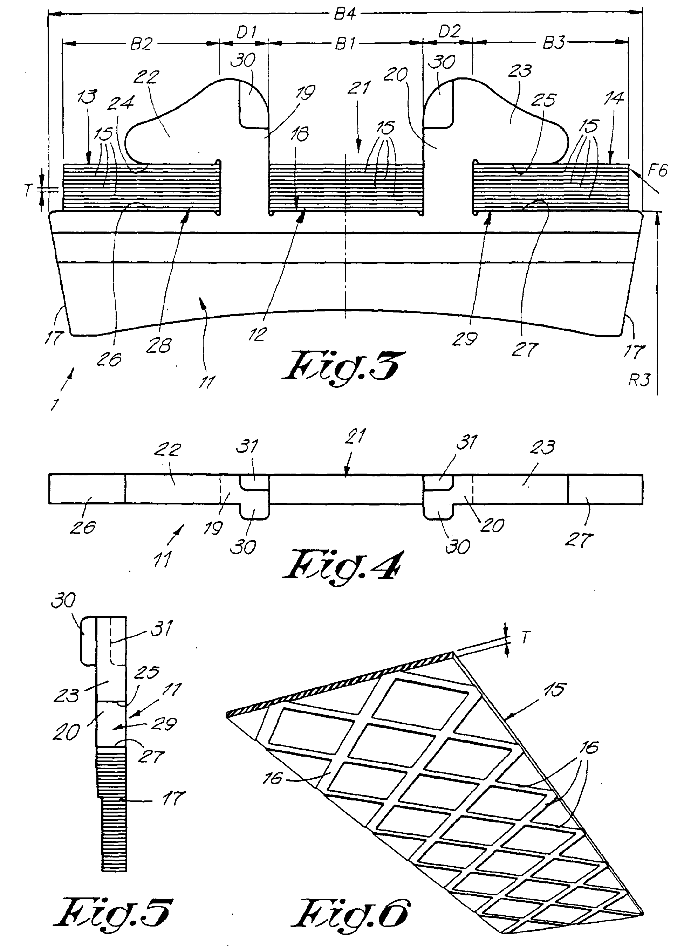

As is represented to greater detail in figures 2 to 5, the transmission element 1 substantially consists of a series of transverse bodies 11, as well as belt packages 12-13-14 cooperating therewith and extending in longitudinal direction. The particularity of the invention consists in that the transmission element 1 comprises at least three of such belt packages which, as explained in the introduction, offers various advantages; the belt packages are indicated, as aforementioned, by reference numbers 12-13-14.

The belt packages 12-13-14 themselves may be of different kind, however, the invention is rendered particularly efficient when these packages, as represented in figures 1 to 3, consist of so-called snare packages, formed by series of flat metal belts 15 which are arranged on top of each other, whereby, preferably, these belts 15, as represented in figure 6, are provided at least at one side, in this case, the underside, with grooves 16 extending over the entire width of each respective belt 15.

In a practical form of embodiment, the belts 15 will have a thickness T of the order of magnitude of 0,2 mm. The depth of the grooves 16 is 0,02 up to 0,03 mm. In assembled condition of the belts 15, the grooves 16 form a channel system for cooling and/or lubricating liquid.

In the represented example, precisely three belt packages 12-13-14 are applied, which has the highest preference in consideration of the fact that thereby the best compromise is achieved between, on one hand, the intended advantages, such as a better cooling in relation to the power which can be transmitted by the transmission element 1, and, on the other hand, the complexity of the technical construction of the whole unit.

The belt packages 12-13-14 are situated next to each other and have the same length, as a result of which they cooperate with the bodies 11 on the same radial level, having a radius R3.

The bodies 11 substantially consist of blocks which, at their extremities, are provided with inclined edges 17 forming contact surfaces which cooperate with the interior sides of the pulley halves 7-8-9-10.

In order to provide for a lateral support between, on one hand, the aforementioned bodies 11 and, on the other hand, the three belt packages 12-13-14, at the radially outward directed sides 18, the bodies 11 are provided with at least two protruding parts 19 and 20.

Between the protruding parts 19-20, a space is present forming a seat 21 for the belt package 12. Hereby, the mutual distance between the parts 19 and 20 preferably coincides with the width B1 of the belt package 12, such that the bodies 11 are centered by this belt package 12.

The parts 19 and 20 show outward-directed hook-shaped portions 22 and 23, the undersides of which, 24-25 respectively, extend parallel to the running surfaces 26, 27 respectively, of the belt packages 13 and 14, and this in such a manner that seats 28-19 are formed in between which the belt packages 13 and 14 precisely can be seated.

At the parts 19 and 20, there are also formed protrusions 30 and recesses 31 which provide for a mutual cooperation between the successive bodies 11.

In that between the belt packages, on one hand, between the belt packages 12 and 13 and, on the other hand, between the belt packages 12 and 14, parts 19 and 20 are present, the flanks of these belt packages always are situated at a distance D1, D2 respectively from each other, as a result of which, as aforementioned, they can be cooled and lubricated more efficiently by means of the usually present liquid which then penetrates between the bodies 11 and thereby can reach these flanks.

Preferably, the widths B1, B2 and B3 of the belt packages 12-13-14 are equal to each other.

In order to optimize the intended effect, it is preferred that the transmission element 1 shows one or more of the following characteristics:
- that the belt packages 12-13-14 each have a width of less than 10 mm, and still better of the order of magnitude of 8 mm;
- that the total width B4 of the transmission element is of the order of magnitude of 30 mm.

Although the invention in the first place is useful with embodiments whereby the belt packages 12-13-14 consist of series of flat belts 15, it is clear that it also offers advantages for embodiments whereby belt packages 12-13-14 of another kind are applied.

Hereby, it is noted that the term "belt packages", within the scope of the present invention, has to be interpreted very broad. For example, the belt packages do not have to consist of flat belts 15 and may be formed of, for example, a bundle of strings, whether or not of metal cable. The term "belt package" also does not necessarily mean that use is made of separate parts, such as the belts 15, however, this term refers to any form of transmission structure which globally behaves as one belt-shaped element. Such belt package thereby may also consist of a structure in one piece, for example, formed by a number of metal strings cast into a band made of synthetic material.

Also the protruding parts 19 and 20 may have another geometry, in other words, deviating from the one represented in the figures.

It is clear that the invention in particular relates to push-belts for continuously variable transmissions. By push-belts, belts are meant comprising bodies 11 which are pushing one onto the other and in this manner are transmitting the driving force from the input shaft to the output shaft, without exerting any substantial pushing forces onto the belt packages themselves. As in such belts, there are no stopping portions at the belt packages, cooperating with said bodies, it is very important that the bodies are kept together by the belt packages in a balanced manner, which according to the invention is obtained by using three of such belt packages, which preferably are arranged and configured as described with reference to the enclosed drawings.

The present invention is in no way limited to the form of embodiment described by way of example and represented in the figures, on the contrary may such endless transmission element be realized in a variety of forms and dimensions without leaving the scope of the invention.

## Claims

1. Endless transmission element for a continuously variable transmission, of the type at least consisting of a series of transverse bodies (11), as well as belt packages (12-13-14) cooperating therewith and extending in longitudinal direction, characterized in that the transmission element (1) comprises at least three of such belt packages (12-13-14).

2. Endless transmission element according to claim 1, characterized in that each belt package (12-13-14) is realized as a snare package.

3. Endless transmission element according to claim 1 or 2, characterized in that it comprises precisely three belt packages (12-13-14).

4. Endless transmission element according to any of the preceding claims, characterized in that the belt packages (12-13-14) are situated next to each other.

5. Endless transmission element according to claim 4, characterized in that the belt packages (12-13-14) all have the same length and cooperate with the aforementioned bodies (11) on the same radial level (R3).

6. Endless transmission element according to claim 4 or 5, characterized in that it comprises an uneven number of belt packages (12-13-14) and that the belt package (12) situated in between is arranged according to the transverse direction in the center of the transmission element (1).

7. Endless transmission element according to any of the claims 4 to 6, characterized in that the belt packages (12-13-14), according to the transverse direction, are situated at a distance (D1-D2) to each other.

8. Endless transmission element according to any of the claims 4 to 7, characterized in that the bodies (11), at their sides (18) directed radially outward, are provided with at least two protruding parts (19-20) and that at least one of the belt packages (12-13-14) extends between the aforementioned two parts (19-20) of each body (11) concerned.

9. Endless transmission element according to claim 8, characterized in that between the protruding parts (19-20) precisely one belt package (12) is present and that this belt package (12) on each side rests against the aforementioned protruding parts (19-20).

10. Endless transmission element according to claim 8 or 9, characterized in that between the aforementioned protruding parts (19-20), one belt package (12) is present, whereas at opposite sides of the protruding parts (19-20), a second and third belt package (13-14), respectively, is present.

11. Endless transmission element according to claim 10, characterized in that the aforementioned protruding parts (19-20) are provided with hook-shaped portions (22-23) which form seats (28-29) for the outermost belt packages (13-14).

12. Endless transmission element according to any of the preceding claims, characterized in that one or more of the belt packages (12-13-14) are provided with a channel system for cooling and/or lubricating liquid.

13. Endless transmission element according to any of the preceding claims, characterized in that the belt packages (12-13-14) consist of series of flat metal belts (15) which are arranged on top of each other.

14. Endless transmission element according to claims 12 and 13, characterized in that the aforementioned channel system consists of grooves (16) extending over the entire width of the belts (15), at least at one side thereof.

15. Endless transmission element according to any of the claims 1 to 12, characterized in that the belt packages each consist of a one-piece structure, more particularly formed by metal strings which are integrally cast into a plastic belt.

16. Endless transmission element according to any of the preceding claims, characterized in that it shows one or a combination of two or more of the following characteristics:
- that the belt packages (12-13-14) each have a width (B1-B2-B3) of less than 10 mm;
- that the belt packages (12-13-14) have a width (B1-B2-B3) of approximately 8 mm;
- that the total width (B4) of the transmission element is of the order of magnitude of 30 mm;
- that the belt packages (12-13-14) show equal widths (B1-B2-B3).

17. Endless transmission element according to any of the preceding claims, characterized in that it is realized as a push-belt which can cooperate with V-shaped pulleys (5-6) of a continuously variable transmission (2) for motor vehicles.
